# EUROPÄISCHE PATENTSCHRIFT

(11) **EP 1 092 657 B1**
(45) Veröffentlichungstag und Bekanntmachung des Hinweises auf die Patenterteilung: **17.11.2004**
(21) Anmeldenummer: 00117572.8
(22) Anmeldetag: 16.08.2000
(51) Int. Cl.: B65G 17/32

(54) **Zahnriemen zum Transportieren von Objekten**
Toothed belt for conveying objects
Courroie crantée pour transporter des objets

(30) Priorität: 14.10.1999 DE 19949545
(43) Veröffentlichungstag der Anmeldung: 18.04.2001
(73) Patentinhaber: BRECO Antriebstechnik Breher GmbH & Co., 32457 Porta Westfalica (DE)
(72) Erfinder: Kölling, Rudi, 32602 Vlotho (DE); Sundermeier, Friedrich, 32549 Bad Oeynhausen (DE)
(74) Vertreter: Hosbach, Hans Ulrich, Dipl.-Ing.

(56) Entgegenhaltungen:
- DE-A- 19 909 617
- US-A- 2 930 478
- US-A- 3 990 160
- US-A- 4 697 693

## Beschreibung

Die Erfindung betrifft einen Zahnriemen zum Transportieren von Objekten, mit einem bandförmigen Riemenkörper, der auf seiner einen Seite angeformte Zähne trägt, wobei mindestens einer der Zähne mit mindestens einer Öffnung versehen ist, die sich von der Kopffläche des zugehörigen Zahns aus durch den Zahnriemen bis zur anderen Seite des Riemenkörpers hindurcherstreckt und in der ein Halteelement für eine auf der anderen Seite des Riemenkörpers zu befestigende Objekt-Halterung angeordnet ist.

Derartige Zahnriemen werden häufig in Produktionslinien eingeschaltet, wobei sie dazu dienen, Werkstücke von einer Bearbeitungsstation zur anderen zu transportieren. Dies kann in kontinuierlicher Bewegung oder aber auch in hin und her gehender Bewegung geschehen.

Zahnriemen bieten den Vorteil einer sehr exakten Bewegungssteuerung und damit einer sehr exakten Positionierung der Objekt-Halterungen an der Be- und an der Entladestation. Dabei sorgen die Objekt-Halterungen dafür, daß die Werkstücke sicher transportiert werden und dabei exakt ausgerichtet bleiben.

Die Objekt-Halterungen wurden bisher gegen die Rückseite des Zahnriemens verspannt, und zwar unter Verwendung von Schrauben, die in die Halteelemente eingeschraubt wurden. Bei letzteren handelte es sich um Muttern, die auf der Höhe der Zahne in den zugehörigen Öffnungen saßen. Die Öffnungen bildeten auf der Höhe der Zahnfüße eine Stufe, auf der die Halteelemente ruhten. Die Öffnungen setzten sich dann mit vermindertem Durchmesser durch den Riemenkörper hindurch fort.

Es wurde gefunden, daß die Transportexaktheit derartiger, aus der Praxis bekannter Zahnriemen zu wünschen übrig läßt. In der DE 199 09 617 A ist, als Beispiel, einen Zahnförderriemen bekannt.

Der Erfindung liegt daher die Aufgabe zugrunde, einen Zahnriemen mit erhöhter Transportgenauigkeit zu schaffen.

Zur Lösung dieser Aufgabe ist der eingangs genannte Zahnriemen erfindungsgemäß dadurch gekennzeichnet,
- daß das Halteelement einen langgestreckten Körper aufweist, der sich durch den Zahn hindurch bis mindestens in den Riemenkörper hineinerstreckt,
- daß der langgestreckte Körper einen Kopf in Form mindestens eines seitlich abstehenden Flügels aufweist und
- daß der Flügel in einen erweiterten Bereich der Öffnung eingreift, der in der Kopffläche des Zahnes ausgebildet ist.

Der Erfindung liegt die Erkenntnis zugrunde, daß bei dem bisher bekannten Transport-Zahnriemen eine Lockerung der Objekt-Halterungen auf die Tatsache zurückzuführen war, daß die in den Öffnungen angeordneten Muttern aufgrund ihrer geringen Abmessungen eine zu kurze Einschraublänge zur Verfügung stellten. Diese Gefahr ist durch die erfindungsgemäßen Halteelemente beseitigt.

Der langgestreckte Körper der Halteelemente, der sich bis mindestens in den Riemenkörper hineinerstreckt, bietet ausreichende Substanz, um eine zuverlässige Befestigung der Objekt-Halterung zu gewährleisten. Dies gilt unabhängig davon, welche Formgebung der langgestreckte Körper erhält.

Vorzugsweise ist der langgestreckte Körper des Halteelements als Hülse ausgebildet. Die Hülse stellt eine ausreichende Einschraublänge zur Verfügung. Dies gilt insbesondere dann, wenn sich die Öffnung als Durchgangsöffnung durch das gesamte Halteelement hindurcherstreckt. Die Einschraublänge ergibt sich dann aus der Summe der Zahnhöhe und derjenigen Länge, mit der sich der langgestreckte Körper in den Riemenkörper hineinerstreckt.

Die Hülsen sind vorzugsweise über ihrer gesamten Länge mit einem Innengewinde versehen. Dies bietet sich insbesondere dann an, wenn die Hülsen aus Metall bestehen. In wesentlicher Weiterbildung der Erfindung wird vorgeschlagen, die Halteelemente aus Kunststoff, vorzugsweise aus glasfaserverstärktem Polyamid herzustellen. Kunststoff von ausreichender Festigkeit und Härte ist ohne weiteres den an die Halteelemente gestellten Anforderungen gewachsen. Vor allen Dingen bietet Kunststoff den Vorteil, daß eine Beschädigung der mit dem Zahnriemen zusammenarbeitenden Zahnscheiben zuverlässig verhindert wird.

Im übrigen besteht auch der Zahnriemen vorzugsweise aus Kunststoff, insbesondere aus Polyurethan, wobei in den Riemenkörper am Übergang zu den Zähnen längslaufende Verstärkungslitzen aus Draht eingelegt sind. Ein derartiger Zahnriemen hat sich bewährt, was die Exaktheit seiner Bewegungssteuerung anbelangt. Polyurethan ist hochtemperaturfest. Gleiches gilt für die Halteelemente aus glasfserverstärktem Polyamid.

Hülsen aus Kunststoff bieten den weiteren Vorteil, daß auf ein Innengewinde verzichtet werden kann. Das Gewinde wird von der selbstformenden Schraube beim Eindrehen in die Hülse eingepreßt. Im übrigen sind Halteelemente aus Kunststoff leichter als Hülsen aus Metall.

Die Exaktheit der Positionierung der Werkstücke sowohl an der Beladestation als auch an der Entladestation wird bestimmt durch die exakte Anordnung der Öffnungen im Zahnriemen und die exakte Befestigung der Objekt-Halterungen bezüglich dieser Öffnungen. Um den letztgenannten Aspekt zu fördern, wird in Weiterbildung der Erfindung vorgeschlagen, daß der langgestreckte Körper des Halteelements den Riemenkörper durchgreift und aus dessen anderer Seite vorsteht. Der langgestreckte Körper bildet also auf der Rückseite des Riemens einen Zentrieransatz, der eine optimale Positionierung und Ausrichtung der Objekt-Halterungen ermöglicht und beim Verkleben der Objekt-Halterungen auch als Fügehilfe zum Vermindern der Haltezeiten dienen kann.

Die Öffnungen im Zahnriemen können im Anschluß an dessen Fertigung erzeugt werden. Eine optimale Genauigkeit ergibt sich dann, wenn die Erzeugung der Öffnungen in den Formprozeß des Zahnriemen integriert wird. Der Formprozeß sorgt auch für die gewünschte Teilungsgenauigkeit. Der Formprozeß bietet ferner die Möglichkeit, eine Mehrzahl von Zahnriemen gewünschter Breite aus einem entsprechenden Formling zu schneiden.

Ist der langgestreckte Körper des Halteelements hülsenförmig ausgebildet, so bildet er mit seinem aus der anderen Seite des Riemenkörpers vorstehenden Ende den Zentrieransatz, der ringförmig ausgebildet ist und das Eindrehen einer Schraube gestattet. In Weiterbildung der Erfindung wird vorgeschlagen, an diesem Ende des langgestreckten Körpers Befestigungs- bzw. Verriegelungsmittel vorzusehen. Eine hülsenförmige Ausbildung ist dabei möglich, aber nicht unbedingt erforderlich. Denkbar ist beispielsweise ein Gewindezapfen zum Aufschrauben einer Mutter. Auch kann das Halteelement mit einer elastischen Verriegelung zum Eingriff in die Objekt-Halterung versehen sein, beispielsweise in Form eines gespaltenen oder anderweitig elastisch ausgebildeten Kopfes.

Der Flügel des Halteelements sorgt dafür, daß das Halteelement beim Verspannen der Objekt-Halterungen nicht in das Material des Zahnriemens hineingezogen werden kann. Dies erhöht ebenfalls die Befestigungssicherheit der Objekt-Halterungen. Dieser Effekt läßt sich ohne weiteres dadurch verstärken, daß der Kopf des Halteelements von zwei abstehenden Flügeln gebildet wird, die einander diametral gegenüber liegen. Die Flügel erstrecken sich beidseitig des langgestreckten Körpers in Längsrichtung des zugehörigen Zahnes und bieten damit eine große, kräftemäßig ausgeglichene Abstützfläche, wobei sie gleichzeitig die Verdrehsicherheit des Halteelements gewährleisten. Vorzugsweise erstrecken sich die Flügel über den Bereich von Verstärkungslitzen aus Draht, die in den Riemenkörper eingebettet sind.

Die Anordnung ist so getroffen, daß der langgestreckte Körper samt Kopf innerhalb der Zahnkontur liegt und somit die Arbeitsweise des Zahnes nicht beeinträchtigen kann. In der Regel wird man den Außendurchmesser des langgestreckten Körpers, der die Breite des Kopfes definiert, so wählen, daß er gerade der Breite des Zahnkopfes entspricht. Dabei ist es dann besonders vorteilhaft, die Flügel im wesentlichen dreieckförmig auszubilden, so daß sie sich harmonisch in den Grundriß des Zahnkopfes einfügen. Viereckig verlaufende Flügel sind allerdings gleichermaßen denkbar, insbesondere wenn der langgestreckte Körper einen geringeren Außendurchmesser aufweist.

In wesentlicher Weiterbildung der Erfindung wird vorgeschlagen, daß der Kopf des langgestreckten Körpers in den erweiterten Bereich der Öffnung eingepaßt ist. Das Halteelement schließt also mit der Ebene der Kopffläche des Zahnes ab, wobei sein Flügel sich praktisch spaltfrei an die Öffnungswandung anschließen. Der große Vorteil dieser Konstruktion liegt darin, daß das Halteelement, das zur Übertragung von Scherkräften geeignet ist, im wesentlichen dasjenige Material ersetzt, welches zur Bildung der Öffnung aus dem Zahnriemen herausgearbeitet worden ist. Die Öffnung stellt also nicht mehr eine Schwächung des Zahnes dar. Dies bedeutet, daß nach wie vor große Kräfte übertragen werden können. Unter diesen Aspekt ist es auch möglich, ein und denselben Zahn mit einer Vielzahl von Befestigungsstellen auszurüsten.

Im übrigen können die Passungen von Öffnung und Halteelement so gewählt werden, daß das Halteelement in die Öffnung hineingedrückt werden kann und dort im Reibschluß gegen Herausfallen gesichert ist, auch wenn es nicht durch die Verspannung einer Objekt-Halterung gehalten wird.

Es bietet sich also die Möglichkeit, den Zahnriemen mit einer Vielzahl von Befestigungsstellen zu bestücken, so daß der Benutzer den Einsatz des Zahnriemens sehr variabel gestalten kann. Er hat also die Möglichkeit, die optimale Anordnung der Objekt-Halterungen sowohl quer zum Zahnriemen als auch in dessen Längsrichtung experimentell zu bestimmen. Auch Improvisationslösungen sind problemlos möglich. Dabei spielt es ersichtlich keine Rolle, welche Art von Objekt-Halterungen im konkreten Einsatzfall zur Anwendung kommen. Der Zahnriemen ist insoweit universell verwendbar.

Die Halteelemente, sofern sie aus Kunststoff bestehen, werden vorzugsweise im Spritzgießverfahren hergestellt. Dies ist nicht nur einfach und preisgünstig, sondern gestattet auch ein hohes Maß an Variabilität in der Formgebung.

Will der Benutzer nur einen Teil der vorgesehenen Befestigungsstellen des Zahnriemens mit Halteelementen bestükken, so kann er in die nicht benutzten Öffnungen Blindelemente einstecken, ggf. einkleben. Die Zahnfestigkeit bleibt also auch unter diesen Umständen erhalten.

Im übrigen sind die Halteelemente und auch die Blindelemente austauschbar und gegen andersartige Elemente auswechselbar. Ein Bruch der Elemente führt nicht zur Zerstörung des Zahnriemens. Auch die Objekt-Halterungen sind in variabler Weise austauschbar und bei Verschleiß ersetzbar.

Die Erfindung wird im folgenden anhand bevorzugter Ausführungsbeispiele im Zusammenhang mit der beiliegenden Zeichnung näher erläutert. Die Zeichnung zeigt in:
Figur 1 einen Schnitt durch einen Zahnriemen quer zu dessen Laufrichtung auf der Höhe eines Zahns,
Figur 2 einen zu Figur 1 gehörenden Grundriß,
Figur 3 einen Grundriß einer abgewandelten Ausführungsform eines Halteelements,
Figur 4 einen Schnitt durch eine weitere abgewandelte Ausführungsform eines Halteelements;
Figur 5 einen Schnitt durch eine weitere abgewandelte Ausführungsform eines Halteelements;
Figur 6 einen Schnitt durch eine weitere abgewandelte Ausführungsform eines Halteelements.

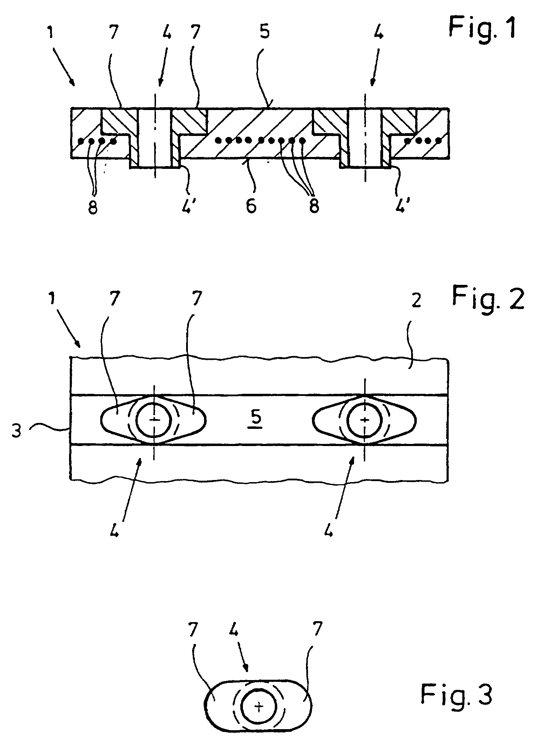

Nach den Figuren 1 und 2 weist ein zum Transportieren von Objekten vorgesehener Zahnriemen 1 einen Riemenkörper 2 auf, der auf seiner einen Seite mit angeformten Zähnen, siehe den Zahn 3 in Figur 2, versehen ist.

In den Zahn 3 sind zwei hülsenförmige Halteelemente 4 eingesteckt, und zwar derart, daß sie mit der Kopffläche 5 des Zahnes fluchten und auf der anderen Seite des Riemenkörpers 2 mit ihrem langgestreckten Körper 4' um ein kurzes Stück aus der Fläche 6 des Riemenkörpers herausragen. Die Halteelemente 4 dienen zur Befestigung nicht dargestellter Objekt-Halterungen.

Letztere werden gegen die Fläche 6 des Riemenkörper 2 und vorzugsweise auch gegen die Halteelemente 4 verspannt, und zwar durch Schrauben, die in die Halteelemente 4 eingedreht werden. Die Halteelemente bestehen aus Kunststoff, so daß das Gewinde in ihrem Inneren verpreßt wird.

Die Halteelemente 4 stellen eine ausreichend große Einschraublänge zur Verfügung, so daß die Objekt-Halterungen sicher und zuverlässig befestigt werden. Die Öffnungen für die Halteelemente sind bei der Herstellung des Zahnriemens 2 erzeugt worden und definieren daher sehr exakt positionierte Befestigungspunkte. Außerdem wirken die aus der Fläche 6 vorstehenden Enden der langgestreckten Körper 4' als Zentrieransätze, die für eine sehr genaue Plazierung der Objekt-Halterungen sorgen.

Sofern die Objekt-Halterungen auf den Zahnriemen aufgeklebt werden, dienen die Zentrieransätze als Fügehilfen, wodurch die sonst erforderlichen langen Haltezeiten vermieden werden. Auch können Schweißwülste an den Außenkanten der Objekt-Halterungen entfallen. Die Zentrieransätze ermöglichen die Übertragung hoher Schwerkräfte. Durch eine definierte Verspannung der Objekt-Halterungen gegen die Zentrieransätze kann die Höhe der Objekt-Halterungen sehr genau justiert werden. Auch läßt sich die auf den Zehnriemen einwirkende Klemmkraft exakt dosieren. Ein Verquetschen des Zahnriemens kann also nicht auftreten.

Die Objekt-Halterungen können von beliebiger Ausbildung sein, wie es die jeweiligen Anforderungen am Einsatzort vorgeben. Danach richtet sich auch der seitliche Abstand zwischen den Halteelementen 4 sowie deren Anzahl pro Zahn. Gleiches gilt für die Verteilung der Halteelemente über der Zahnriemenlänge.

Der Zahnriemen 1 ermöglicht konzeptionsgemäß eine sehr exakte Bewegungssteuerung. Dabei wird durch die Ausbildung und Anordnung der Halteelemente 4 eine sehr genaue Positionierung der zu transportierenden Objekte auf dem Zahnriemen 1 sichergestellt. Letzterer bietet sich also überall dort an, wo Objekte, beispielsweise Werkstücke, sehr exakt von einer Beschickungsstation zu einer Entnahmestation transportiert werden sollen.

Die Halteelemente 4 sind jeweils mit einem Kopf versehen, der von zwei seitlich abstehenden Flügeln 7 gebildet wird. Die Flügel 7 sorgen dafür, daß die Halteelemente beim Verspannen der Objekt-Halterungen gegen die Fläche 6 des Riemenkörpers 2 nicht durch die zugehörigen Öffnungen hindurchgezogen werden. Außerdem bilden die Flügel 7 eine zuverlässige Verdrehsicherung der Halteelemente 4.

Die Halteelemente 4 einschließlich ihrer Flügel 7 sind in die zugehörigen Öffnungen des Zahnriemens 1 praktisch spaltfrei eingepaßt. Sie kompensieren also die Schwächung des Zahns 3, die sich durch die Öffnungen ergeben würde, sofern diese nicht mit Halteelementen 4 besetzt wären. Letztere sind in der Lage, Scherkräfte zu übertragen, so daß die Belastbarkeit des Zahnriemens 1 durch die Befestigung der Objekt-Halterungen nicht vermindert wird.

Wie in den Figuren 1 und 2 dargestellt, liegen die Halteelemente 4 innerhalb des Zahnprofils und treten daher mit den zugehörigen Zahnscheiben nicht in Berührung. Der Außenumfang der langgestreckten Körper 4' der Halteelemente 4, der im oberen Bereich der Breite des Kopfes zwischen den beiden Flügeln 7 entspricht, hat in etwa die Breite der Kopffläche 5 des Zahnes 3. Abweichen hiervon kann es günstig sein, den Außendurchmesser des langgestreckten Körpers etwas zu vergrößern und so zu wählen, daß die Halteelemente in ihrem Kopfbereich der Kontur des Zahnkopfes folgen, so daß dessen Flanken im Bereich des Zahnkopfes teilelliptische Ausnehmungen bilden.

Die Halteelemente 4 bestehen aus glasfaserverstärktem Polyamid. Andere Materialien sind ebenfalls denkbar, sofern sie die erforderliche Festigkeit und - was häufig von wesentlicher Bedeutung ist - vorteilhafterweise auch die geforderte Temperaturbeständigkeit besitzen.

Der Zahnriemen 1 besteht aus Polyurethan und ist durch längslaufende Drahtlitzen 8 verstärkt. Wie in Figur 1 angedeutet, können die Drahtlitzen 8 auch in den Bereichen der Flügel 7 der Halteelemente 4 verlaufen und somit deren Halt im Material des Zahnriemens unterstützen.

Das Halteelement 4 nach Figur 3 unterscheidet sich von dem nach den Figuren 1 und 2 lediglich dadurch, daß die Flügel 7 angenähert rechteckig sind. Die Ecken sind, wie auch die Spitzen der Flügel nach den Figuren 1 und 2, gerundet ausgebildet.

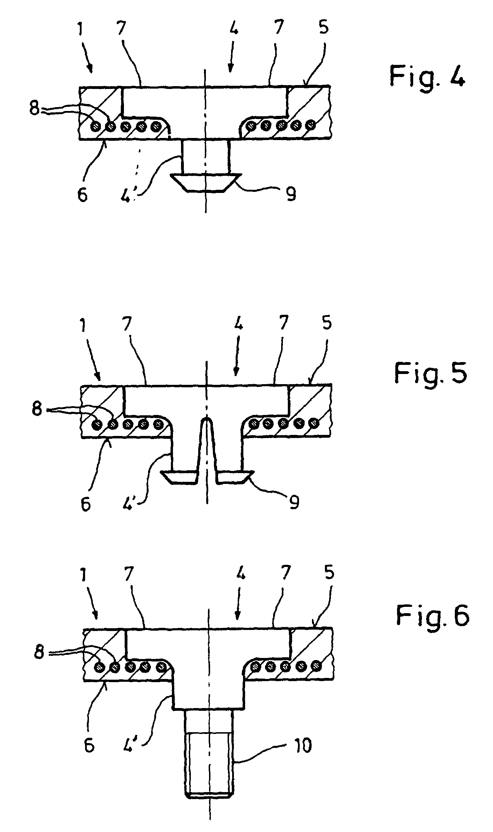

Bei der Ausführungsform nach Figur 4 trägt der langgestreckte Körper 4' des Halteelements 4 einen pilzförmigen Kopf 9 zum Einklippen in eine komplementäre Ausnehmung der zugehörigen Objekt-Halterung.

Das Halteelement 4 nach Figur 5 unterscheidet sich von dem nach Figur 4 dadurch, daß der langgestreckte Körper 4' gabelartig gespalten und demnach elastisch zusammendrückbar ist.

Das Halteelement 4 nach Figur 6 schließlich trägt einen Gewindestift 10 zum Aufschrauben einer Mutter. Die zugehörige Objekt-Halterung wird gegen eine Schulter am Fuß des Gewindestiftes 10 und gegen den Zahnriemen verspannt.

Auch bei den Ausführungsformen nach den Figuren 4 bis 6 bewirken die langgestreckten Körper 4' der Halteelemente 4 eine Zentrierung der zugehörigen Objekt-Halterungen.

Im Rahmen der Erfindung sind durchaus Abwandlungsmöglichkeiten gegeben. Vor allen Dingen kann es ausreichen, die Halteelemente 4 lediglich ein Stück in den Riemenkörper 2 hineinragen zu lassen, sofern die dabei von den Hülsen zur Verfügung gestellte Einschraublänge zur sicheren Befestigung der Objekt-Halterungen ausreicht. Insbesondere Blindelemente wird man in ihrer Länge so dimensionieren, daß sie höchstens mit der Fläche 6 des Riemenkörpers 2 abschließen. Die Blindelemente dienen dazu, solche Öffnungen in den Zähnen des Zahnriemens zu verschließen, die vorgesehen sind, den Einsatzbereich des Zahnriemens variabel zu gestalten, momentan jedoch nicht genutzt werden. Die Blindelemente sorgen dafür, daß in den zugehörigen Zähnen keine Schwächung auftritt. Anstelle von hülsenförmigen Blindelementen können auch entsprechend geformte Kopfstifte eingesteckt werden. Die Dimensionierung der Hülsen bzw. Stifte und der zugehörigen Öffnungen des Zahnriemens wird so getroffen, daß sich ein ausreichend selbsthaltender Reibschluß ergibt. Die hülsenförmigen Halteelemente nach den Figuren 1 bis 3 können ohne weiteres mit den Verriegelungsmitteln nach den Figuren 4 und 5 kombiniert werden.

## Patentansprüche

1. Zahnriemen zum Transportieren von Objekten, mit einem bandförmigen Riemenkörper (2), der auf seiner einen Seite angeformte Zähne (3) trägt, wobei mindestens einer der Zähne (3) mit mindestens einer Öffnung versehen sind, die sich von der Kopffläche (5) des zugehörigen Zahns (3) aus durch den Zahnriemen (1) bis zur anderen Seite des Riemenkörpers (2) hindurcherstreckt und in der ein Halteelement für eine auf der anderen Seite des Riemenkörpers (2) zu befestigende Objekt-Halterung angeordnet ist, und wobei
das Halteelement (4) einen langgestreckten Körper (4') aufweist, der sich durch den Zahn (3) hindurch bis mindestens in den Riemenkörper (2) hineinerstreckt,
**dadurch gekennzeichnet,**
- **daß** der langgestreckte Körper (4') einen Kopf in Form mindestens eines seitlich abstehenden Flügels (7) aufweist und
- **daß** der Flügel (7) in einen erweiterten Bereich der Öffnung eingreift, der in der Kopffläche (5) des Zahnes (3) ausgebildet ist.

2. Zahnriemen nach Anspruch 1, **dadurch gekennzeichnet, daß** das Halteelement (4) als Hülse ausgebildet ist.

3. Zahnriemen nach Anspruch 2, **dadurch gekennzeichnet, daß** die Hülse vorzugsweise über ihrer gesamten Länge mit einem Innengewinde versehen ist.

4. Zahnriemen nach einem der Ansprüche 1 bis 3, **dadurch gekennzeichnet, daß** das Halteelement (4) aus Kunststoff, vorzugsweise aus glasfaserverstärktem Polyamid besteht.

5. Zahnriemen nach einem der Ansprüche 1 bis 4, **dadurch gekennzeichnet, daß** der langgestreckte Körper (4') des Halteelements (4) den Riemenkörper (2) durchgreift und aus dessen anderer Seite vorsteht.

6. Zahnriemen nach Anspruch 5, **dadurch gekennzeichnet, daß** der langgestreckte Körper (4') des Halteelements (4) an seinem aus der anderen Seite des Zahnriemens vorstehenden Ende Befestigungs- bzw. Verriegelungsmittel aufweist.

7. Zahnriemen nach einem der Ansprüche 1 bis 6, **dadurch gekennzeichnet, daß** der Flügel (7) im wesentlichen dreieckförmig ausgebildet ist.

8. Zahnriehmen nach einem der Ansprüche 1 oder 7, **dadurch gekennzeichnet, daß** der Kopf des Halteelements (4) von zwei abstehenden Flügeln (7) gebildet wird, die einander diametral gegenüberliegen.

9. Zahnriemen nach einem der Ansprüche 1 bis 8, **dadurch gekennzeichnet, daß** der Riemenkörper (2) längslaufende Verstärkungslitzen (8) enthält, die auch unterhalb der Flügel (7) verlaufen.

10. Zahnriemen nach einem der Ansprüche 1 bis 9, **dadurch gekennzeichnet, daß** der Kopf des Halteelements (4) in den erweiterten Bereich der Öffnung eingepaßt ist.

## Claims

1. A toothed belt for transporting objects including a band-shaped belt body (2), which carries integrally formed teeth (3) on one side, at least one of the teeth (3) being provided with at least one opening, which extends from the top surface (5) of the associating tooth (3) through the toothed belt (1) to the other side of the belt body (2) and in which a retaining element is disposed for an object mount to be secured on the other side of the belt body (2) and wherein the retaining element (4) has an elongate body (4'), which extends through the tooth (3) at least into the belt body (2), **characterised in that** the elongate body (4') has a head in the form of at least one laterally projecting wing (7) and that the wing engages in a broadened region of the opening, which is formed in the top surface (5) of the tooth (3).

2. A toothed belt as claimed in Claim 1, **characterised in that** the retaining element (4) is constructed in the form of a sleeve.

3. A toothed belt as claimed in Claim 2, **characterised in that** the sleeve is provided with an internal screw thread, preferably over its entire length.

4. A toothed belt as claimed in one of Claims 1 to 3, **characterised in that** the retaining element (4) consists of plastic material, preferably glass-reinforced polyamide.

5. A toothed belt as claimed in one of Claims 1 to 4, **characterised in that** the elongate body (4') of the retaining element (4) passes through the belt body (2) and projects out of its other side.

6. A toothed belt as claimed in Claim 5, **characterised in that** he elongate body (4') of the retaining element (4) affords fastening or locking means on its end projecting out of the other side of the toothed belt.

7. A toothed belt as claimed in one of Claims 1 to 6, **characterised in that** the wing (7) is of substantially triangular shape.

8. A toothed belt as claimed in one of Claims 1 or 7, **characterised in that** the head of the retaining element (4) is constituted by two projecting wings (7), which are diametrically opposed to one another.

9. A toothed belt as claimed on of Claims 1 to 8, **characterised in that** the belt body (2) includes longitudinally extending reinforcing strands (8), which also extend below the wings (7).

10. A toothed belt as claimed in one of Claims 1 to 9, **characterised in that** the head of the retaining element (4) is fitted into the broadened region of the opening.

## Revendications

1. Courroie dentée pour le transport d'objets, comprenant un corps de courroie en forme de bande (2) qui porte des dents (3) formées sur une de ses faces, au moins une des dents (3) étant pourvue d'au moins une ouverture qui traverse la courroie dentée (1) de la face de tête (5) de la dent (3) jusqu'à l'autre côté du corps de courroie (2) et dans laquelle est placé un élément de fixation pour un support d'objets se fixant sur l'autre face du corps de courroie (2), et l'élément de fixation (4) présentant un corps allongé (4') qui traverse la dent (3) et s'étend jusqu'au moins dans le corps de courroie (2),
**caractérisée par le fait**
- **que** le corps allongé (4') présente une tête ayant la forme d'au moins une aile saillant latéralement (7) et
- **que** l'aile (7) s'engage dans une zone élargie de l'ouverture qui est formée dans la face de tête (5) de la dent (3).

2. Courroie dentée selon la revendication 1, **caractérisée par le fait que** l'élément de fixation (4) est constitué d'une douille.

3. Courroie dentée selon la revendication 2, **caractérisée par le fait que** la douille est pourvue d'un taraudage de préférence sur toute sa longueur.

4. Courroie dentée selon l'une des revendications 1 à 3, **caractérisée par le fait que** l'élément de fixation (4) est en plastique, de préférence en polyamide renforcé par des fibres de verre.

5. Courroie dentée selon l'une des revendications 1 à 4, **caractérisée par le fait que** le corps allongé (4') de l'élément de fixation (4) traverse le corps de courroie (2) et dépasse de l'autre côté de celui-ci.

6. Courroie dentée selon la revendication 5, **caractérisée par le fait que** le corps allongé (4') de l'élément de fixation (4) présente des moyens de fixation ou de verrouillage à son extrémité qui dépasse de l'autre côté de la courroie dentée.

7. Courroie dentée selon l'une des revendications 1 à 6, **caractérisée par le fait que** l'aile (7) est sensiblement triangulaire.

8. Courroie dentée selon l'une des revendications 1 à 7, **caractérisée par le fait que** la tête de l'élément de fixation (4) est formé de deux ailes saillantes (7) qui sont diamétralement opposées.

9. Courroie dentée selon l'une des revendications 1 à 8, **caractérisée par le fait que** le corps de courroie (2) contient des cordons de renfort s'étendant longitudinalement (8) qui s'étendent aussi au-dessous des ailes (7).

10. Courroie dentée selon l'une des revendications 1 à 9, **caractérisée par le fait que** la tête de l'élément de fixation (4) est ajustée dans la partie élargie de l'ouverture.
